Europäisches Patentamt

European Patent Office

Office européen des brevets

(19)

(11) Publication number: **0 030 779**
**B1**

(12) **EUROPEAN PATENT SPECIFICATION**

(45) Date of publication of patent specification: **18.04.84**

(51) Int. Cl.³: **B 60 R 21/10, A 62 B 35/02**

(21) Application number: **80302731.7**

(22) Date of filing: **08.08.80**

(54) Safety belt system.

(30) Priority: **18.12.79 PC T/US79/01125**

(43) Date of publication of application:
**24.06.81 Bulletin 81/25**

(45) Publication of the grant of the patent:
**18.04.84 Bulletin 84/16**

(84) Designated Contracting States:
**BE FR GB**

(56) References cited:
**DE - A - 2 701 917**
**DE - C - 1 480 047**
**GB - A - 1 311 978**
**US - A - 3 248 148**
**US - A - 3 323 832**

(73) Proprietor: **CATERPILLAR TRACTOR CO.**
**100 Northeast Adams Street**
**Peoria Illinois 61629 (US)**

(72) Inventor: **Molnar, John**
**469 South Smith Street**
**Aurora Illinois 60505 (US)**

(74) Representative: **Jackson, Peter Arthur et al,**
**GILL JENNINGS & EVERY 53-64 Chancery Lane**
**London WC2A 1HN (GB)**

Safety belt system

This invention relates to a safety belt system, particularly for a vehicle, and having a device for preventing "cinch-up" of the seat belt.

Seat belt systems exist in a wide variety of forms, the most common being that with a continuously operating belt retractor system. In this system, the belt is wound on a retracting shaft inserted in a housing, is unwound to lie across a user's lap, and has a male buckle member to be inserted in a female buckle member. A spring bias is provided in a retractor base so as to exert a back pressure on the belt to take up any slack and hold the user firmly on the seat. A toothed retractor gear (often referred to as a ratchet wheel) in combination with a pawl is provided with the retractor shaft to prevent further unreeling of the belt once the slack has been taken up.

Although such seat belt systems are effective in restricting passenger movement in a collision, problems are often encountered when the vehicle is operated over rough terrain. When these safety belt systems are used in off-road vehicles such as tractors and earthmoving equipment, a condition known as "cinch-up" can occur. As the vehicle is driven over rough terrain, the driver will be forced down into his seat thereby causing slack in the belt. This excess slack will be taken up by the retractor mechanism and the retractor ratchet wheel and pawl will prevent further extension of the belt thereby causing the belt to tighten about the driver. Such tightening may cause discomfort and impair the driving ability of the operator.

It is desirable to provide a retractor lock mechanism for use with a safety belt system. The incorporation of such a device in a safety belt system prevents "cinch-up" by locking the retractor ratchet wheel and shaft in position thereby preventing take up of the belt.

US—A—3248148 discloses a safety belt system having a belt terminating in a male buckle member which engages a female buckle member; retractor means incorporating a spring loaded shaft for winding up the belt when the buckle members are disengaged; and toothed wheels fixed one to each end of the shaft and being engaged by a lock member when the male buckle member is engaged in the female buckle member to lock the retractor shaft against rotation. Such a system is hereinafter referred to as of the kind described. In the particular system disclosed in this U.S. Specification, the lock member is formed by the tip of the male buckle member. The female buckle member is provided by a part of the retractor housing, which has to be large enough to accommodate the belt when retracted and this makes it cumbersome for handling of the female buckle member by the operator. The use of an intermediate latch between the male buckle member and toothed wheels is suggested, but there is no positive proposal as to how this might be achieved.

US—A—3233296 discloses another belt system in which, when the two buckle members are brought into engagement, a lock member is moved against spring action to engage and lock a toothed wheel on one end of a retractor shaft. The lock member, being only at one side of the buckle members provides an offset reaction which tends to cant the male buckle member relatively to the female buckle member and additional guides have been provided for aligning the buckle members relatively to one another.

US—A—3891273 and DE—C—1480047 disclose other belt systems in which bifurcated lock members are moved, upon engagement of the buckle members, into locking engagement with toothed wheels on both ends of a retractor shaft. However, in both cases, it is the female buckle member which engages and moves the lock member so that the free end of the belt carries the heavier female buckle member. Also, in both cases the locking member is pivotably or rockably mounted so that the female buckle member has to be brought close to the retractor housing to operate the lock member and consequently the male buckle member is equally closely positioned relatively to the retractor housing, making it cumbersome and inconvenient for handling by the operator.

In accordance with the present invention, a safety belt system of the kind described is characterised in that an elongate base member is secured to a seat base by a guide bolt and carries at one end a housing of the retractor and, at its other end, the female buckle member; in that the lock member is of elongate Y-shape and is reciprocable along the base member with one end working in the female buckle member for abutment by the male buckle member, and its other end bifurcated, straddling the guide bolt, and providing retractor engaging members which work in the retractor housing for engaging the toothed wheels; in that a central portion of the lock member has a longitudinal slot and, at the end of the slot nearer to the bifurcated end, a spring post; and in that an anchor bolt, which is fixed to the base member, extends through the other end of the slot and provides an attachment for one end of a tension spring, the other end of which is attached to the spring post; whereby insertion of the male buckle member into the female buckle member causes the lock member to move against the action of the spring to bring the retractor members into engagement with the toothed wheels while engagement of the guide and anchor bolts with the lock member assist in correct alignment of the lock member.

This provides an extremely simple system in which the retractor shaft can be positively locked upon engagement of the buckle members but the positioning of the female buckle member at the end of an elongate base member remote from the retractor housing enables convenient handling of the female buckle member. Also, since the alignment of the lock member, when it is moved to perform its locking function with the toothed wheels on the retractor shaft, is assisted by the guide and anchor bolts, which are in any case provided for other purposes, close tolerances in the lock member and the cooperating parts of the female buckle member and retracting housing are unnecessary.

An example of a system constructed in accordance with the invention is illustrated in the accompanying drawings, in which:—

Figure 1 is a side elevation of the retractor and female buckle member of the system and showing a part of the vehicle seat;

Figure 2 is a plan view of the retractor lock member;

Figure 2A is an end elevation of the retractor lock member as seen from the line II—II in Figure 2;

Figure 3 is a fragmentary sectional view of the retractor mechanism;

Figure 4 is a plan of the system as seen substantially on the line IV—IV of Figure 1, with the seat omitted, and with the lock member disengaged; and,

Figure 5 is a view similar to part of Figure 4, but showing the male and female buckle members engaged and the lock member engaged.

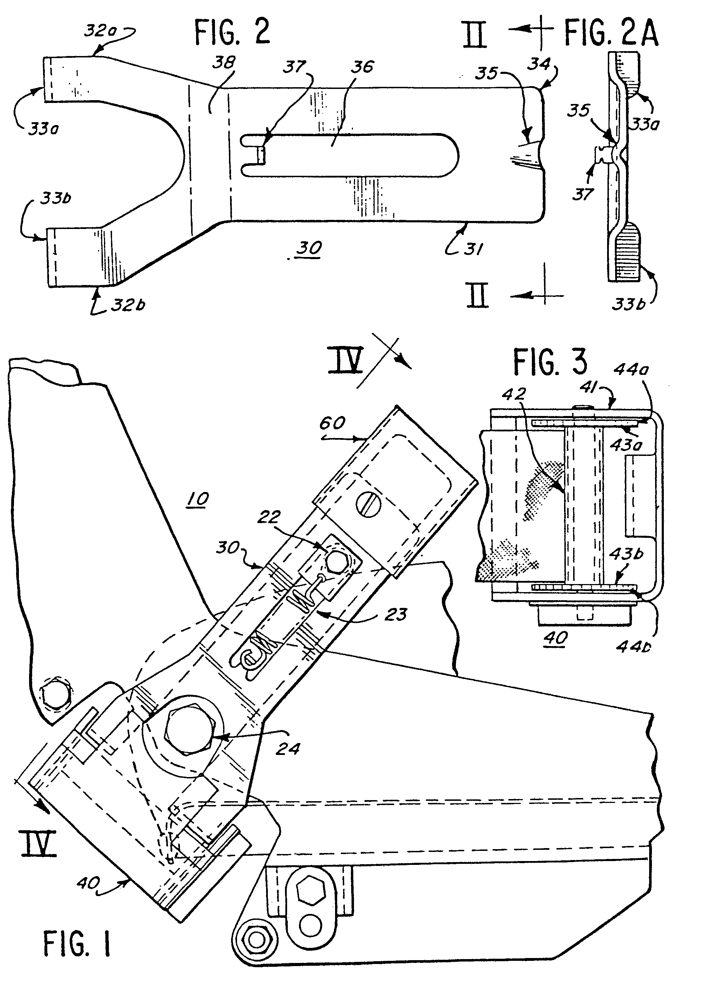

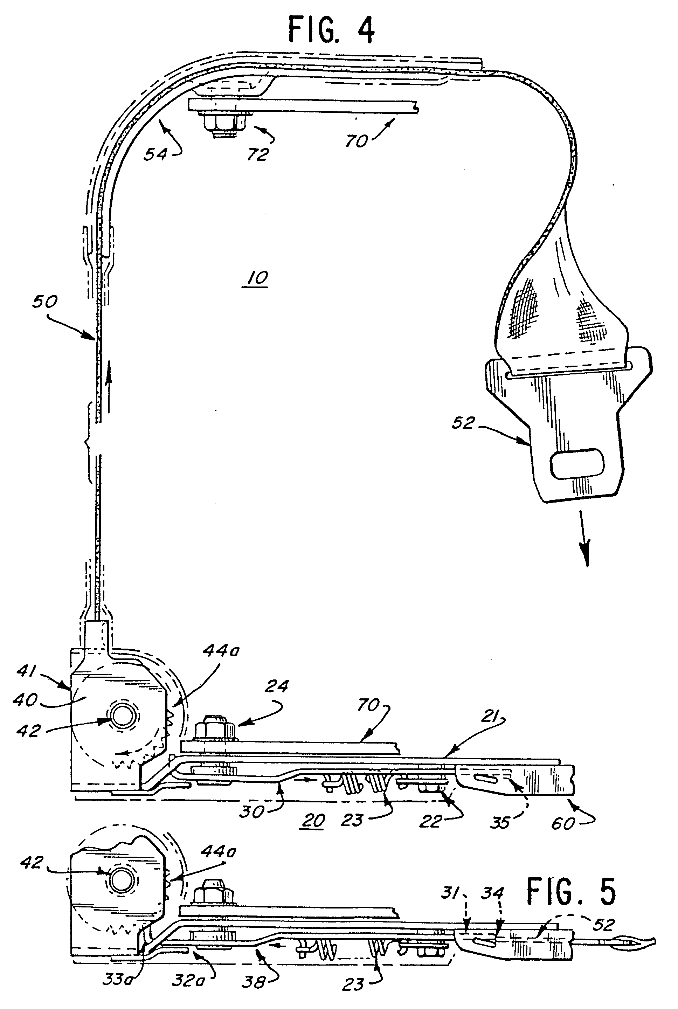

Referring to Figures 1 and 4 a seat belt system 10 includes a retractor lock device 20, a retractor 40, a belt 50 terminating in a male buckle member 52, a belt guide 54 and a female buckle member 60 having spring loaded latch means (not shown) which engages the male buckle member 52 in the usual way. The retractor lock device 20 has a base member 21 having an anchor bolt 22 attached thereto, a spring 23, a guide bolt 24, and a lock member 30.

Referring to Figures 2 and 2A, the lock member 30 is shown as being generally of Y-shape, and has an abutment member 31 and bifurcated retractor engaging members 32a and 32b. The abutment member 31 has an abutment end 34, a raised portion 35, a guide slot 36, a spring post 37, and an inclined surface 38. The two retractor engaging members 32a and 32b each have retractor engaging ends 33a and 33b respectively.

Referring to Figures 3 and 4, the retractor 40 includes a housing 41, a retractor shaft 42, and two ratchet wheels 43a and 43b attached to the ends of the retractor shaft 42. The wheels 43a and 43b have a plurality of teeth 44a and 44b. respectively disposed about their periphery.

Referring to Figures 1 and 4, the female buckle member 60 is attached to the base member 21, which in turn is attached to the retractor 40 and to a seat base 70 by the guide bolt 24. The lock member 30 is positioned over the base member 21 so that the abutment member 31 is within the female buckle member 60 and the retractor engaging members 32a and 32b are positioned on either side of the guide bolt 24. With the lock member 30 disposed in this manner, the anchor bolt 22 is positioned within the guide slot 36. The spring 23 is attached to the spring post 37 of the lock member 30 and to the anchor bolt 22 of the base member 21.

The retractor shaft 42 and wheels 43 are mounted within the housing 41 so as to permit rotation. The retractor shaft 42 is spring-loaded (not shown) and the belt 50 is wound about it. The belt guide 54 is attached to the seat base 70 by a bolt 72 and acts to guide the belt 50 around the passenger.

Industrial applicability

In operation, when the seat belt system 10 is not in use as shown in Figure 4, spring 23 acts to force the lock member 30 into a disengaged position, whereby the retractor engaging ends 33a and 33b are spaced from the teeth 44a and 44b of the retractor 40. This allows retractor shaft 42 to rotate freely within retractor 40.

As the male buckle member 52 and the belt 50 are extended from the retractor 40, the retractor shaft 42 and the wheels 43a and 43b turn against the biasing force of the retractor spring (not shown). As the male buckle member 52 is inserted into the female buckle member 60, as shown in Figure 5, the end of the male buckle member 52 contacts the enlarged surface consisting of the abutment end 34 and the raised portion 35 of the lock member 30, thereby forcing the lock member 30 toward the engaged position against the biasing force of the spring 23. The lock member 30 assumes the engaged position when the male buckle member 52 is latched into the female buckle member 60. When the lock member 30 is in the engaged position, the retractor engaging ends 33a and 33b of the lock member 30 contact the teeth 44a and 44b, respectively, of the retractor 40, as seen in Figure 5, thereby preventing further rotation of the retractor shaft 42. The guide bolt 24, the guide slot 36, the anchor bolt 22, and the inclined surface 38 operate to align the lock member 30 for proper contacting of the teeth 44a and 44b. When the lock member 30 is in the engaged position, slack in the belt 50 is not taken up by the retractor 40 due to the prevention of retractor shaft rotation by the engaging of the teeth 44a and 44b by the lock member 30.

As the male buckle member 52 is unlatched and removed from the female buckle member 60, the spring 23 acts to move the lock member 30 to the disengaged position thereby allowing rotation of the retractor shaft 42 to take up the belt 50.

## Claim

A safety belt system (10) having a belt (50) terminating in a male buckle member (52) which engages a female buckle member (60); retractor means (40) incorporating a spring loaded shaft (42) for winding up the belt (50) when the buckle members are disengaged; and toothed wheels (43a, 43b) fixed one to each end of the shaft and being engaged by a lock member (30) when the male buckle member (52) is engaged in the female buckle member (60) to lock the retractor shaft against rotation; characterised in that an elongate base member (21) is secured to a seat base by a guide bolt (24) and carries at one end a housing (41) of the retractor and, at its other end, the female buckle member (60); in that the lock member (30) is of elongate Y-shape and is reciprocable along the base member with one end (31) working in the female buckle member for abutment by the male buckle member, and its other end bifurcated, straddling the guide bolt (24), and providing retractor engaging members (32a, 32b) which work in the retractor housing for engaging the toothed wheels (33a, 33b); in that a central portion of the lock member has a longitudinal slot (36) and, at the end of the slot nearer to the bifurcated end, a spring post (37); and in that an anchor bolt (22), which is fixed to the base member (21), extends through the other end of the slot and provides an attachment for one end of a tension spring (23), the other end of which is attached to the spring post (37); whereby insertion of the male buckle member into the female buckle member causes the lock member to move against the action of the spring to bring the retraction members into engagement with the toothed wheels while engagement of the guide and anchor bolts with the lock member assist in correct alignment of the lock members.

## Patentanspruch

Sicherheitsgurtsystem (10) mit einem Gurt (50), der einem Einsteck-Schnallenglied (52) endet, welches mit einem Aufnahme-Schnallenglied (60) in Eingriff kommt, Rückführmittel (40) mit einer federbelasteten Welle (42) zum Aufwickeln des Gurts (50) dann, wenn die Schnallenglieder außer Eingriff sind, und gezahnte Räder (43a, 43b), von denen eines mit jedem Ende der Welle befestigt ist und die mit einem Verriegelungsglied (30) dann in Eingriff stehen, wenn das Einsteck-Schnallenglied (52) in Eingriff mit dem Aufnahme-Schnallenglied (60) steht, um so die Rückführvorrichtungswelle gegenüber Drehung zu verriegeln, dadurch gekennzeichnet, daß ein langgestrecktes Basisglied (21) an einer Sitzbasis durch einen Führungsbolzen (24) befestigt ist und an einem Ende ein Gehäuse (41) der Rückführvorrichtung und an ihrem anderen Ende das Aufnahme-Schnallenglied (60) trägt, daß das Verriegelungsglied (30) langgestreckte Y-Form besitzt und längs des Basisgliedes hin- und herbewegbar ist, wobei ein Ende (31) im Aufnahme-Schnallenglied zum Anschlag durch das Einsteck-Schnallenglied arbeitet und wobei das andere Ende zweigabelig ist und den Führungsbolzen (24) umfaßt und Rückführvorrichtungseingriffsglieder (32a, 32b) vorsieht, die in dem Rückführvorrichtungsgehäuse arbeiten, um mit den gezahnten Rädern (33a, 33b) in Eingriff zu kommen, daß ein Mittelteil des Verriegelungsglieds einen Längsschlitz (36) besitzt, und daß am Ende des Schlitzes näher am zweigabeligen Ende ein Federpfosten (37) vorgesehen ist, und daß ein Ankerbolzen (22), der am Basisglied (21) befestigt ist, sich durch das andere Ende des Schlitzes erstreckt und eine Befestigung für ein Ende einer Spannfeder (23) vorsieht, deren anderes Ende am Federpfosten (37) befestigt ist, wodurch das Einsetzen des Einsteck-Schnallenglieds in das Aufnahme-Schnallenglied bewirkt, daß sich das Verriegelungsglied entgegen der Wirkung der Feder bewegt und die Rückführvorrichtungsglieder in Eingriff mit den gezahnten Rädern bringt, während der Eingriff der Führungs- und Ankerbolzen mit dem Verriegelungsglied bei der richtigen Ausrichtung der Verriegelungsglieder unterstüztend wirkt.

## Revendication

Système de ceinture de sécurité (10) comportant une ceinture (50 se terminant par un élément de boucle mâle (52) qui vient en prise avec un élément de boucle femelle (60); un moyen enrouleur (40) comportant un arbre (42) chargé par un ressort pour enrouler la ceinture (50) quand les éléments de la boucle sont séparés; et des roues dentées (43a, 43b) fixées une à chaque extrémité de l'arbre et retenues par un organe de blocage (30) quand l'élément de boucle mâle (52) est en prise dans l'élément de boucle femelle (60) afin de bloquer la rotation de l'arbre de l'enrouleur, caractérisé en ce qu'un organe de base allongé (21) est fixé à une base de siège par un boulon de guidage (24) et porte, à une extrémité, une enveloppe (41) pour l'enrouleur et, à son autre extrémité, l'élément de boucle femelle (60); en ce que l'organe de blocage (30) présente la forme d'un Y allongé et est déplaçable alternativement le long de l'organe de base avec une extrémité (31) travaillant dans l'élément de boucle femelle de façon que l'élément de boucle mâle puisse venir buter contre elle, et son autre extrémité fourchue, chevauchant le boulon de guidage (24) et constituant des organes (32a, 32b) contactant l'enrouleur qui travaillent dans l'enveloppe de l'enrouleur en prise avec les roues dentées (33a, 33b); en ce qu'une partie centrale de l'organe de blocage présente une fente longitudinale (36) et, à l'extrémité de la fente voisine de l'extrémité fourchue, une languette (37) pour l'accrochage d'un ressort; et en ce qu'un boulon d'ancrage (22), qui est fixé à l'organe (21), s'étend à travers l'autre extrémité de la fente et constitue un point de fixation pour une extrémité d'un ressort de tension (23) dont l'autre extrémité est accrochée à la languette (37); ce qui fait que l'introduction de l'élément de boucle mâle dans l'élément de boucle femelle oblige l'organe de blocage à se déplacer à l'encontre de l'action du ressort pour amener les organes de l'enrouleur en prise avec les roues dentées, tandis que la mise en prise des boulons de guidage et d'ancrage avec l'organe de blocage contribue à l'alignement correct de l'organe de blocage.

FIG. 2

FIG. 2A

FIG. 3

FIG. I

# FIG. 4

54
72
70
10
50
52

41
40
42
44a
24
70
21

30
20
23
22
35
60

42
44a

31
34
52

# FIG. 5

33a
32a
38
23